# FASCICULE DE BREVET EUROPEEN

(11) **EP 2 843 761 B1**
(45) Date de publication et mention de la délivrance du brevet: **04.07.2018**
(21) Numéro de dépôt: 13306188.7
(22) Date de dépôt: 30.08.2013
(51) Int. Cl.: H01Q 1/12, H01Q 1/24, H01Q 3/00

(54) **Système d'antenne compact**
Kompaktantennensystem
Compact antenna system

(43) Date de publication de la demande: 04.03.2015
(73) Titulaire: Alcatel- Lucent Shanghai Bell Co., Ltd, Shanghai 201206 (CN)
(72) Inventeur: Tuau, Denis, 44570 Trignac (FR); Vanetti, Loic, 44570 Trignac (FR)
(74) Mandataire: Berthier, Karine

(56) Documents cités:
- US-B1- 6 222 504
- US-B1- 6 361 007
- US-B2- 7 864 111

## Description

### DOMAINE

La présente invention se rapporte au domaine des systèmes d'antenne, et en particulier à un système comprenant une antenne et son dispositif de montage sur un support.

### ARRIERE PLAN

Le déploiement de la nouvelle génération de réseaux de téléphone cellulaire selon le standard dit LTE (pour « Long Term Evolution » en anglais), l'augmentation du volume de données échangées et l'importance du trafic de communication associé, ainsi que l'élargissement de la communauté des utilisateurs vers les pays émergents (Chine, Inde) nécessitent d'accroître la capacité des réseaux pour la transmission de données. En plus de cela, les bandes de fréquences traditionnelles (principalement le domaine 10-40 GHz) sont saturées, et la densité croissante des utilisateurs dans les réseaux urbains augmente le besoin de petites cellules où les antennes sont directement installées dans les zones de vie des villes. Le document de l'art antérieur US 6222504 décrit un système d'antenne ajustable en rotation. Toutes ces évolutions induisent un nombre croissant de nouvelles exigences. L'utilisation de bandes de fréquences plus élevées (56-90 GHz) offre plus de bande passante (en GHz) exprimée en pourcentage de la fréquence centrale de fonctionnement de l'antenne. Cela contribue à répondre aux besoins de capacité en bande passante. Ces hautes fréquences souffrent de niveaux d'absorption plus élevés dans l'air/eau, de telle sorte qu'elles sont plus adaptées aux liaisons courtes qui correspondent au besoin de plus petites cellules. La petite taille des cellules permet aussi un bon compromis sur le gain, et permet donc l'utilisation de plus petites tailles d'ouverture de l'antenne. Afin d'améliorer l'acceptation par l'opinion publique et les propriétaires de l'installation d'antennes dans les zones résidentielles, il est important d'avoir des solutions discrètes de petit volume qui ne perturbent pas l'ensemble du paysage. Les opérateurs de réseaux ont traduit ce souhait en une exigence d'antenne dites à « faible facteur de forme » dans la mesure où celles-ci ont des extensions limitées, ou bien d'équipements ayant une apparence complètement différente de celle d'une antenne.

Avec des antennes plus petites, le coût du matériel diminue de telle sorte que le facteur de coût représenté par l'installation de l'antenne concentre de plus en plus l'attention des opérateurs qui souhaitent réduire et optimiser les temps d'installation. En conclusion, des antennes à faible facteurs de forme fonctionnant à hautes radiofréquences, qui permettent une installation facilitée et une meilleure discrétion objective et subjective, deviennent désormais incontournables.

Les systèmes de liaison radio actuels se composent généralement d'une antenne d'émission (pouvant être de divers types techniques tel que parabole, coquille, panneau, cornet, ...), qui est soutenue par un support fixé sur une structure de type tour ou mât, et une boîte radio qui est souvent montée directement à l'arrière de l'antenne et par conséquent qui est également soutenue par le support de l'antenne. Le dispositif de montage se compose d'un certain nombre d'élément support, de vis, d'écrous et autres éléments de fixation. Toutefois un tel système présente plusieurs inconvénients :
- l'antenne reste clairement visible et identifiable comme telle ;
- l'assemblage et l'installation d'un tel système d'antenne est relativement long en raison du grand nombre de pièces devant être manipulées par les installateurs ;
- en fonction de la réalisation technique du système, il est probable que le processus d'installation nécessite plus de deux mains ;
- le système n'est pas agréable visuellement, et une structure comportant une antenne séparée du dispositif de, montage et de la boîte radio est loin d'être optimisé vis-à-vis de sa résistance au vent.

### RESUME

Afin d'éliminer les inconvénients de l'art antérieur, on propose un système d'antenne d'aspect visuel agréable et de volume réduit, dont l'installation est plus aisée et rapide.

L'objet de la présente invention est un système d'antenne comprenant
- un premier module assurant la fonction radiofréquence et contenant au moins une antenne et au moins une boîte de connexion radio,
- un second module de montage assurant et le positionnement la fixation du système d'antenne sur un support,
- une pièce d'interface assurant la liaison entre le premier module et le second module et permettant l'alignement de l'antenne.

De manière préférentielle, la pièce d'interface permet une jonction rotative entre le premier module et le second module.

Selon un premier aspect, la pièce d'interface comporte une première platine apte à être solidarisée avec une face de contact du premier module et une seconde platine apte à être solidarisée avec une face de contact du second module.

Selon un deuxième aspect, la pièce d'interface peut être réalisée d'une seule pièce avec le premier module RF ou avec le second module de montage. Selon une variante, la pièce d'interface peut être réalisée en deux partie, une première partie étant d'une seule pièce avec le premier module RF et une seconde partie étant d'une seule pièce avec le second module de montage.

Selon un troisième aspect, le système d'antenne a une forme générale arrondie lisse.

Selon un quatrième aspect, le premier module a une forme au moins partiellement cylindrique.

Selon un cinquième aspect, le second module est apte à fixer le système d'antenne sur un support tubulaire ou plan.

Selon une première configuration, l'axe du premier module et l'axe du second module sont confondus.

Selon une deuxième configuration, l'axe du premier module et l'axe du second module sont sensiblement perpendiculaires.

La solution proposée est un système d'antenne compact qui assure toutes les fonctions attendues : la transmission et la réception des ondes radiofréquences pour assurer le fonctionnement de l'antenne, le réglage précis de l'antenne dans les plans horizontal (azimut) et vertical (tilt), et la fixation du système d'antenne sur un support.

La forme générale du système d'antenne est une solution visuellement agréable qui présente plusieurs avantages. La forme générale arrondie, évitant toute surface plane quelle que soit la direction, réduit la prise au vent ainsi que le risque d'accumulation de neige ou de glace sur le système d'antenne, en particulier dans les régions à climat froid. Ce système d'antenne permet aussi de faciliter le montage et le réglage car il comporte de beaucoup moins de pièces. Enfin la conception offre une grande flexibilité en termes d'option de montage, en particulier il peut être installé sur n'importe quel support, notamment cylindrique ou plan, permettant ainsi d'adapter le système d'antenne à tous les environnements.

### BREVE DESCRIPTION

D'autres caractéristiques et avantages apparaîtront à la lecture de la description qui suit d'un mode de réalisation, donné bien entendu à titre illustratif et non limitatif, et dans le dessin annexé sur lequel
- la figure 1 illustre un mode de réalisation du système d'antenne,
- la figure 2 illustre la liaison entre les deux modules,
- les figures 3a à 3d illustre une boîte de connexion radio et un radôme pour le système d'antenne de la figure 1,
- la figure 4 illustre une vue schématique de dessus d'un premier mode de réalisation du second module pour le montage du système d'antenne sur un support tubulaire,
- les figures 5a, 5b et 5c illustre un premier mode de réalisation d'une pièce d'interface pour un système d'antenne dans le cas où le premier module et le second module sont alignés,
- les figures 6a et 6b illustrent respectivement des vues de côté et en perspective une configuration du système d'antenne monté sur un support tubulaire dans le cas où le premier module et le second module sont alignés,
- la figure 7 illustre un deuxième mode de réalisation d'une pièce d'interface dans le cas où le premier module et le second module ne sont pas alignés,
- les figures 8a et 8b illustrent respectivement des vues de côté et en perspective une autre configuration du système d'antenne monté sur un support plan dans le cas où le premier module et le second module ne sont pas alignés,
- les figures 9a et 9b illustrent des vues en perspective de plusieurs configurations du système d'antenne monté sur un support tubulaire,
- la figure 10 illustre une vue schématique en coupe d'un deuxième mode réalisation du second module pour le montage du système d'antenne sur un support plan,
- la figure 11 illustre une vue en perspective une configuration du système d'antenne monté sur un support plan,
- les figures 12a et 12b illustrent des vues de face et en perspective d'une autre configuration du système d'antenne monté sur un support plan.

### DESCRIPTION DETAILLEE

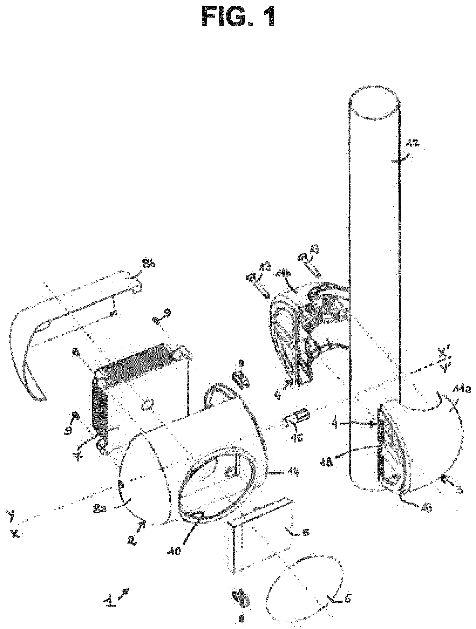

Dans le mode de réalisation illustré sur la figure 1, le système d'antenne **1** comporte à une extrémité un premier module **2** destiné notamment à assurer la fonction d'émission transmission des ondes radiofréquences, et à l'extrémité opposée un second module **3** destiné à permettre le montage du système d'antenne sur un support. Le premier module RF **2** est relié au second module de montage **3** grâce à une pièce d'interface **4.**

Afin d'assurer sa fonction, le premier module RF **2** doit contenir au moins une antenne et la boîte de connexion radio nécessaire à son fonctionnement. Dans le cas présent une antenne **5,** recouverte de son radôme **6,** et une boîte de connexion radio **7** sont placées à l'intérieur du capot **8a, 8b** en deux parties du premier module RF **2.** Dans un concept large bande, un radôme **6** de fréquence spécifique est utilisé au lieu de se contenter du matériau du capot **8a, 8b** seulement.

Ce système d'antenne peut s'appliquer à un large éventail de technologies d'antennes. L'antenne **5** est ici représentée sous la forme d'un bloc rectangulaire qui suggère une antenne réseau, mais on pourrait tout aussi bien utiliser une antenne à réflecteur de type parabole ou offset, ou bien encore une antenne simple à alimentation directe comme une antenne cornet à placer dans le module.

La partie arrière **8a** et la partie avant **8b** du capot du premier module RF **2** sont assemblées et solidarisées au moyen de butées ou clapets **9.** Une fois les deux parties **8a, 8b** assemblées, le capot **8a, 8b** du premier module **2** a ici une forme sensiblement cylindrique et comporte une ouverture circulaire **10** destinée à être placée en regard de l'antenne.

Le système d'antenne peut être fixé sur tous types de support. Le second module de montage **3** comporte ici une bride mâle **11a** et une bride femelle **11b** destinées à enserrer un support tubulaire **12,** tel qu'un mât par exemple. Les deux brides **11a, 11b** sont assemblées autour du support tubulaire **12** et solidarisées, par exemple au moyen de boulons **13.**

L'axe **X-X'** du premier module RF **2** et l'axe **Y-Y'** du second module de montage **3** sont ici confondus. La pièce d'interface **4** plane se trouve entre une face de contact **14** du premier module RF **2** et une face de contact **15** du second module de montage **3** afin de relier les deux modules **2, 3.** La pièce d'interface **4** peut, comme dans le cas présent être réalisé d'un seul tenant avec le premier module RF **2** ou le second module de montage **3.** Bien entendu, les modules **2, 3** étant en deux parties, la pièce d'interface **4** sera aussi en deux parties dans ce cas. Un doigt de centrage **16** permet d'assurer le positionnement correct des modules **2, 3** l'un par rapport à l'autre. Une fois reliés, les premier module RF **2** et second module de montage **3** forment un système d'antenne **1** compact de forme harmonieuse continue, homogène et sans aspérités, comprenant à la fois les fonctions radiofréquence et de montage. La forme arrondie lisse du système d'antenne **1,** évitant toute surface plane quelle que soit la direction considérée, améliore le comportement mécanique du système d'antenne **1** vis-à-vis des contraintes environnementales, en réduisant notamment la prise au vent. La forme du système d'antenne **1,** et notamment celle du capot **8a, 8b** du premier module RF **2,** est adaptée pour une réalisation en polymère par moulage mais d'autres matériaux peuvent également être utilisés.

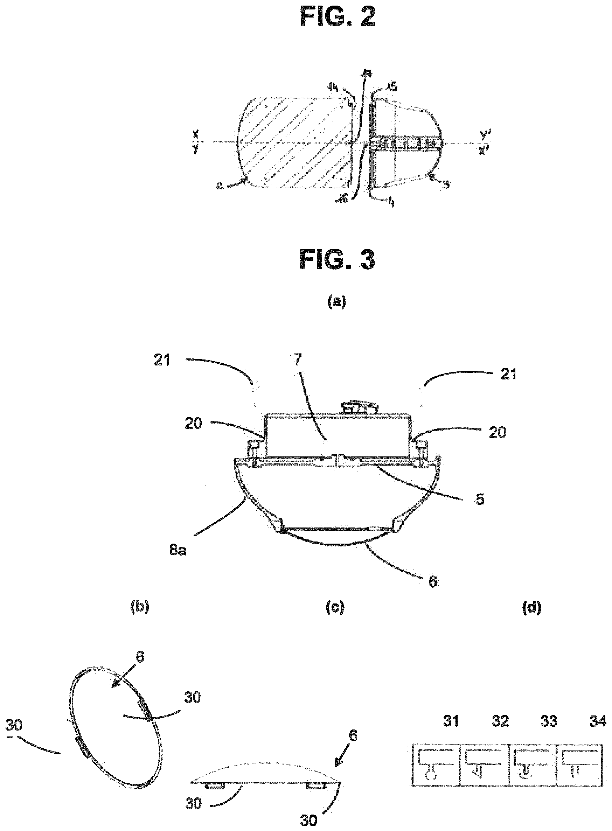

La figure 2 illustre plus précisément l'accostage du premier module RF **2** et du second module de montage **3** grâce au doigt de centrage **16** cylindrique qui s'insère dans un logement **17** ménagé au centre de chacune des faces de contact **14** et **15** des modules **2, 3** et qui passe par un trou traversant **18** au centre la pièce d'interface **4.** La pièce d'interface **4** peut être réalisée d'une seule pièce soit avec le premier module RF **2,** soit avec le second module de montage **3.** La pièce d'interface **4** peut aussi être réalisée en deux parties, une première partie étant d'une seule pièce avec le premier module RF **2** et une seconde partie étant d'une seule pièce avec le second module de montage **3,** la liaison entre les deux modules **2, 3** s'effectuant par l'accostage des deux parties de la pièce d'interface **4.**

La figure 3a illustre une vue en coupe du premier module RF **2** dont on a ôté la partie arrière **8b** du capot. La boîte de connexion radio **7** est fixée à l'arrière de l'antenne **5** par des moyens de fixation **21** qui dépendent de la liaison définie par le client. Les moyens de fixation **21** les plus couramment utilisés sont des vis. La boîte de connexion radio **7** est protégée des contraintes environnementales parla partie **8b** arrière du capot.

Un radôme **6,** illustré sur les figures 3b, 3c et 3d, est placé dans l'ouverture circulaire **10** afin de protéger l'antenne disposée à l'intérieur du premier module RF **2.** Le radôme 6 comporte des moyens de fixation **30** rapides et réversibles. Différentes méthodes de fixation du radôme **6** peuvent être envisagées. Ces moyens de fixation **30** peuvent être de différents types, par exemple tels qu'une vis quart de tour ou un clip qui peut prendre diverses formes d'accrochage **31, 32, 33** et **34** destinées à coopérer avec le bord de l'ouverture circulaire **10** ou avec un logement adapté ménagé dans le rebord de l'ouverture circulaire **10.** Les moyens de fixation 30 sont choisis de manière à pouvoir facilement changer le radôme **6,** donnant ainsi une grande flexibilité dans la réalisation du système d'antenne **1.**

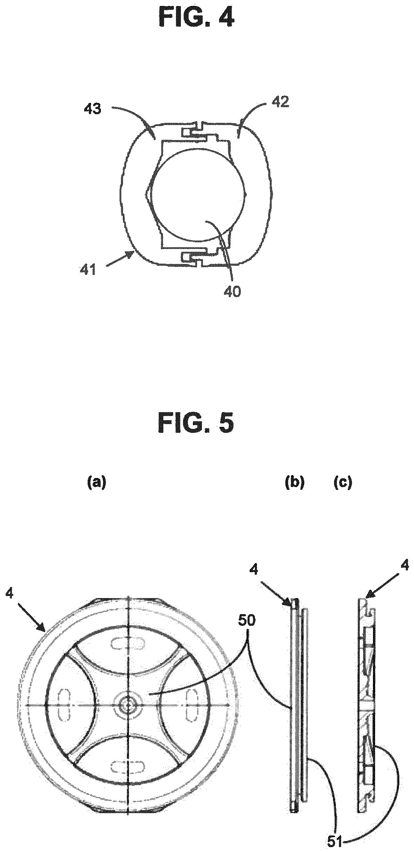

Un tel système d'antenne peut être fixé sur différents types de support. Dans le cas de la figure 4, le système d'antenne est fixé sur un support tubulaire **40** grâce au second module **41** qui comporte une bride mâle **42** et une bride femelle **43.** La bride femelle **43** a une forme lui permettant de s'assembler à la bride mâle **42** de manière à réaliser un collier qui se place autour du support **40.** La liaison entre les brides **42, 43** est réalisée par des moyen de fixation, tels que des vis par exemple, qui permettent d'exercer une pression sur le support tubulaire, assurant ainsi le maintien en position du système.

Les figures 5a, 5b et 5c illustrent un mode de réalisation de la pièce d'interface **4** de la figure 1 dans le cas où l'axe **X-X'** du premier module RF **2** et l'axe **Y-Y'** du second module de montage **3** sont confondus.

Afin de relier le premier module RF **2** et le second module de montage **3,** la pièce d'interface **4** comporte une première platine **50** destinée à être solidarisée avec la face de contact **14** du premier module RF **2** et une seconde platine **51** destinée à être solidarisée avec la face de contact **15** du second module de montage **3.** La pièce d'interface **4** permet une jonction rotative entre le premier module RF **2** et le second module de montage **3.** La pièce d'interface **4** est ici de forme sensiblement circulaire.

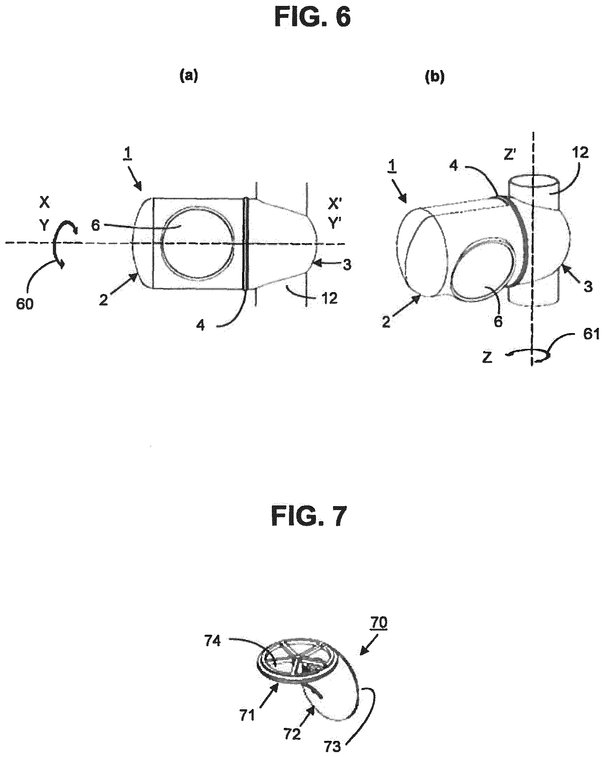

On considérera maintenant les figures 6a et 6b qui illustrent en vues schématiques de face et en perspective le système d'antenne **1** dans le cas de son montage sur le support tubulaire **12.** Le premier module RF **2** et le second module de montage **3** sont alignés selon un axe commun aux axes **X-X'** et **Y-Y'.** Le premier module RF **2** peut effectuer une rotation **60** autour de son axe **X-X',** cependant que le second module de montage **3** reste fixe. Sur la figure 6b, le premier module RF **2** a pivoté sur lui-même et par rapport au second module de montage **3.** Cette rotation **60** a pour but d'amener l'antenne **5,** se trouvant dans le premier module RF **2,** derrière le radôme **6** placé dans l'ouverture circulaire **10,** dans la position souhaitée. Le second module de montage **3** est placé à une hauteur choisie du support tubulaire **12** et, avant serrage, peut effectuer une rotation **61** autour de l'axe **Z-Z'** du support tubulaire **12.** Ainsi le système d'antenne **1** peut être réglé en azimut et en inclinaison (ou « tilt ») lors de son installation sur le support tubulaire **12.** Pour faciliter le pointage du système d'antenne, un outillage commun aux différents éléments composant le système d'antenne et de forme adaptée a été développé.

La figure 7 illustre un autre mode de réalisation d'une pièce d'interface **80** dans le cas où l'axe **X-X'** du premier module RF **2** et l'axe **Y-Y'** du second module de montage **3** font un angle **α** non nul, qui vaut ici par exemple de l'ordre de 90°. La pièce d'interface **70** est rigide et comprend deux platines **71** et **72.** Les platines **71** et **72** font entre elles un angle égal à l'angle **α** formé par l'axe **X-X'** du premier module RF **2** et l'axe **Y-Y'** du second module de montage **3.** La face **74** de la platine **71** est apte à se solidariser à la face de contact **14** du premier module RF **2,** de même la face **73** de la platine **72** est apte à se solidariser à la face de contact **15** du second module de montage **3,** afin de maintenir les modules **2, 3** dans une position relative prédéfinie. Bien que la pièce d'interface soit ici décrite pour relier des modules dont les axes **X-X'** et **Y-Y'** font un angle **α** de l'ordre de 90°, sa forme peut être modifiée de manière à s'adapter à la liaison de modules dont les axes **X-X'** et **Y-Y'** font un angle **α** quelconque.

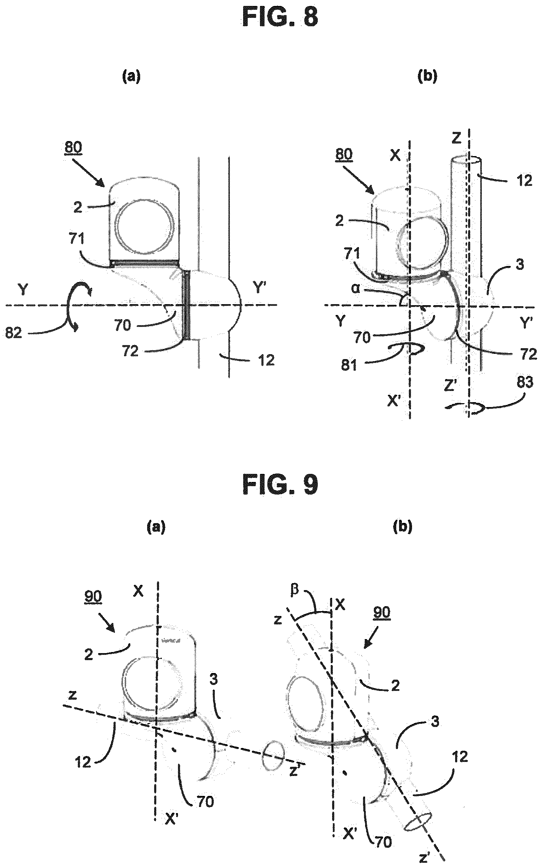

Sur les figures 8a et 8b, un système d'antenne **80** est fixé à un support tubulaire **12** ayant un axe **Z-Z'** qui est parallèle à l'axe **X-X'** du premier module RF **2.** Le premier module RF **2** et le second module de montage **3** sont disposés de telle sorte que l'axe **X-X'** du premier module RF **2** soit sensiblement perpendiculaire à l'axe **Y-Y'** du second module de montage **3,** les deux modules **2, 3** étant reliés par la pièce d'interface **70** précédemment décrite. La face de contact **14** du premier module RF **2** est solidaire d'une platine **71** de la pièce d'interface **70** et la face de contact **15** du second module de montage **3** est solidaire de l'autre platine **72** de la pièce d'interface **70.** Cette configuration du système d'antenne nécessite une liaison rigide qui confère une plus grande mobilité au système d'antenne en lui ajoutant un axe supplémentaire de rotation. La liaison entre la face de contact **14** du premier module RF **2** et la platine **71** de la pièce d'interface **70** permet la rotation **81** du premier module RF **2** autour de l'axe **X-X'.** La liaison entre la face de contact **15** du second module de montage **3** et la platine **72** de la pièce d'interface **70** permet la rotation **82** du second module de montage **3** autour de l'axe **Y-Y'.** Avant serrage, le second module de montage **3** permet une rotation **83** autour de l'axe **Z-Z'** du support tubulaire **12.**

Différentes configurations peuvent être obtenues, comme illustré sur les figures 9a et 9b, par rotation relative des premier module RF **2** et second module de montage **3** grâce à la pièce d'interface **70.**

Sur la figure 9a, un système d'antenne **90** est fixé à un support tubulaire **12** d'axe **Z-Z'** qui est sensiblement perpendiculaire à l'axe **X-X'** du premier module RF **2.** Par rapport à la configuration précédente, le second module de montage **3** a pivoté et fait maintenant un angle α d'environ 90° par rapport à l'axe **X-X'** du premier module RF **2,** ce qui lui a été permis par la pièce d'interface **70** rigide.

Sur la figure 9b, le premier module RF **2** a pivoté sur lui-même, autour de son axe **X-X',** d'environ 45°. Et le second module de montage **3** a aussi pivoté sur lui-même, autour de son axe **Y-Y'**, de telle sorte que l'axe **Z-Z'** du support tubulaire **12** fait maintenant un angle β, qui vaut ici par exemple 45°, avec l'axe **X-X'** du premier module RF **2.** La position respective de l'axe **X-X'** du premier module RF **2** et de l'axe **Y-Y'** du second module de montage **3** est inchangée, et ils sont restés sensiblement perpendiculaires. Les configurations précédemment décrites s'adaptent à tous les types de support tubulaire, quelle que soit l'inclinaison de son axe par rapport aux axes des premier et second modules, ainsi la continuité géométrique de la forme du système d'antenne est conservée.

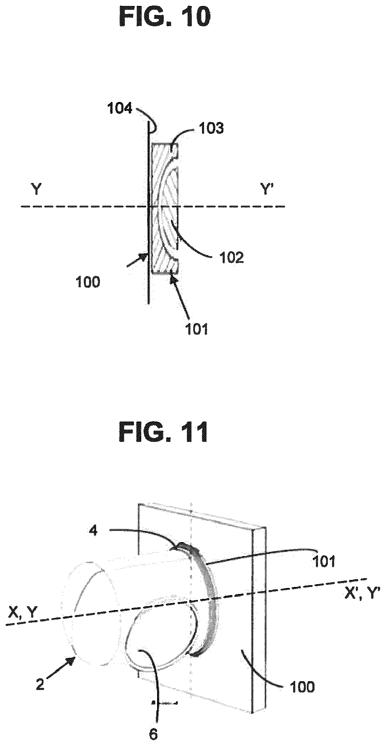

Le système d'antenne peut aussi être fixé sur un support plan **100** grâce à un second module de montage **101** qui comporte une bride mâle **102** et une bride femelle **103,** comme illustré sur la figure 10. L'axe **Y-Y'** du second module de montage **3** est perpendiculaire à la surface **104** du support plan **100.** La bride femelle **103,** aussi appelée platine murale, est appliquée et fixée sur le support plan 100 à l'aide de moyens conventionnels comme par exemple des chevilles ou des tiges filetées. La bride mâle **102** est encastrée et fixée dans la bride femelle **103** pour former le second module de montage **101.** Le second module de montage **101** peut être solidarisé avec le premier module RF **2.** La forme harmonieuse arrondie lisse du système d'antenne **1** évite toute surface plane non protégée par le support **100** ce qui améliore le comportement mécanique du système d'antenne **1** vis-à-vis des contraintes environnementales

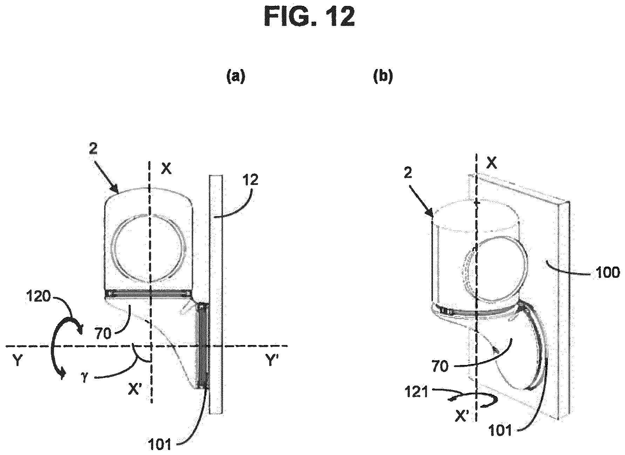

Le système d'antenne peut ainsi être fixé sur un support plan **100,** tel qu'une paroi, selon plusieurs configurations comme illustré sur les figures 11 et 12.

Sur la figure 11, on a représenté un premier module RF **2** et un second module de montage **101** lorsque leurs axes respectifs **X-X'** et **Y-Y'** sont confondus. Dans ce cas, la liaison entre le premier module RF **2** et le second module de montage **101,** au moyen de la pièce d'interface **4,** ne permet que la rotation du premier module RF **2** sur lui-même autour de l'axe **X-X'** afin d'orienter l'antenne **5** placée derrière le radôme **6** dans la direction souhaitée.

Sur les figures 12a et 12b, on a représenté un premier module RF **2** et un second module de montage **101** lorsque leurs axes respectifs **X-X'** et **Y-Y'** font un angle γ non nul, ici par exemple de l'ordre de 90°. Le système d'antenne peut alors être fixé sur un mur dont la surface est parallèle à l'axe X-X' du premier module RF afin de conférer davantage de flexibilité dans le réglage de la direction de pointage en azimut de l'antenne.

Bien q**ue le no**mbre de pièces soit réduit au minimum, ce système d'antenne offre grâce à sa modularité, une variété d'options de montage à partir de seulement trois sous-ensembles :
- un module affecté à la fonctionnalité RF contenant la boîte radio et l'antenne,
- un module de montage assurant la fixation sur un support, qui peut être notamment plan ou tubulaire mais d'autre support sont envisageables,
- une pièce d'interface ayant deux fonctions : d'une part elle assure la liaison entre les deux modules précédents, notamment dans le cas où ces deux modules ne sont pas alignés selon un même axe, d'autre part elle permet le réglage de l'orientation de l'antenne.

Grâce aux formes diverses que peut adopter la pièce d'interface, différentes options de montage sont possibles. On a montré que le système d'antenne peut être aussi bien fixé à un support plan qu'à un support tubulaire, quelle que soit son orientation par rapport à l'axe X-X' du premier module RF contenant l'antenne. On pourra notamment envisager les configurations suivantes :
- montage sur un support tubulaire dont l'axe est sensiblement parallèle à l'axe du module RF contenant l'antenne,
- montage sur un support tubulaire dont l'axe est sensiblement perpendiculaire à l'axe du module RF contenant l'antenne,
- montage sur un support tubulaire dont l'axe est fait un angle quelconque avec l'axe du module RF contenant l'antenne,
- montage sur un support plan dont la surface est sensiblement parallèle à l'axe du module RF contenant l'antenne,
- montage sur un support plan dont la surface est sensiblement perpendiculaire à l'axe du module RF contenant l'antenne,

Les degrés de libertés permettant l'alignement de l'antenne, aussi bien en azimut (réglage de l'angle dans le plan horizontal) qu'en inclinaison (réglage de l'angle dans le plan horizontal) de l'antenne dépend de la configuration mise en oeuvre imposée par le site d'installation. Ces différentes configurations sont rendues possibles par la flexibilité de l'assemblage du premier module RF et du second module de montage grâce au profil variable de la pièce d'interface qui permet à la fois la mobilité entre les modules et le maintien en position du système d'antenne.

Bien entendu, la présente invention n'est pas limitée aux modes de réalisation décrits, mais elle est susceptible de nombreuses variantes accessibles à l'homme de l'art sans que l'on s'écarte de l'esprit de l'invention.

## Revendications

1. Système d'antenne comprenant :
- un premier module, disposé selon un premier axe (X-X'), assurant la fonction radiofréquence et contenant au moins une antenne et au moins une boîte de connexion radio, le système d'antenne étant **caractérisé en ce qu'**il comprend:
- un second module de montage, disposé selon un second axe (Y-Y'), assurant le positionnement et la fixation du système d'antenne sur un support disposé selon un troisième axe (Z-Z'), et ledit second module étant adapté pour effectuer une première rotation (83) autour dudit troisième axe (Z-Z'),
- une pièce d'interface assurant la liaison entre le premier module et le second module, ladite liaison entre la pièce d'interface et le premier module permettant une seconde rotation (81) du premier module autour du premier axe (X-X'), et ladite liaison entre la pièce d'interface et le second module permettant une troisième rotation (82) de la pièce d'interface et du premier module autour du second axe (Y-Y'),
le système d'antenne permettant l'alignement de l'antenne par la première rotation (83) et par la seconde rotation (81) et par la troisième rotation (82).

2. Système d'antenne selon la revendication 1, dans lequel la pièce d'interface comporte une première platine apte à être solidarisée avec une face de contact du premier module et une seconde platine apte à être solidarisée avec une face de contact du second module.

3. Système d'antenne selon l'une des revendications 1 et 2, dans lequel la pièce d'interface peut être réalisée d'une seule pièce avec le premier module RF ou avec le second module de montage.

4. Système d'antenne selon la revendication 3, dans lequel la pièce d'interface peut être réalisée en deux partie, une première partie étant d'une seule pièce avec le premier module RF et une seconde partie étant d'une seule pièce avec le second module de montage.

5. Système d'antenne selon l'une des revendications précédentes, ayant une forme générale arrondie lisse.

6. Système d'antenne selon l'une des revendications précédentes, dans lequel le premier module a une forme au moins partiellement cylindrique.

7. Système d'antenne selon l'une des revendications précédentes, dans lequel le second module est apte à fixer le système d'antenne sur un support tubulaire ou plan.

8. Système d'antenne selon l'une des revendications précédentes, dans lequel le premier axe (X-X') du premier module et le second axe (Y-Y') du second module sont confondus.

9. Système d'antenne selon l'une des revendications 1 à 7, dans lequel le premier axe (X-X') du premier module et le second axe (Y-Y') du second module sont sensiblement perpendiculaires.

## Patentansprüche

1. Antennensystem, umfassend:
- ein erstes Modul, das gemäß einer ersten Achse (X-X') angeordnet ist, die Funkfrequenzfunktion sicherstellt und mindestens eine Antenne und mindestens einen Funkverbindungskasten beinhaltet,
wobei das Antennensystem **dadurch gekennzeichnet ist, dass** es umfasst:
- ein zweites Montagemodul, das gemäß einer zweiten Achse (Y-Y') angeordnet ist, die Positionierung und die Befestigung des Antennensystems auf einer Halterung sicherstellt, die gemäß einer dritten Achse (Z-Z') angeordnet ist, und wobei das besagte zweite Modul angepasst ist, eine erste Drehung (83) um die besagte dritte Achse (Z-Z') auszuführen,
- wobei ein Schnittstellenteil die Verbindung zwischen dem ersten Modul und dem zweiten Modul sicherstellt, wobei die besagte Verbindung zwischen dem Schnittstellenteil und dem ersten Modul eine zweite Drehung (81) des ersten Moduls um die erste Achse (X-X') ermöglicht, und wobei die besagte Verbindung zwischen dem Schnittstellenteil und dem zweiten Modul eine dritte Drehung (82) des Schnittstellenteils und des ersten Moduls um die zweite Achse (Y-Y') ermöglicht,
wobei das Antennensystem die Ausrichtung der Antenne durch die erste Drehung (83) und durch die zweite Drehung (81) und durch die dritte Drehung (82) ermöglicht.

2. Antennensystem nach Anspruch 1, wobei das Schnittstellenteil eine erste Platine aufweist, die geeignet ist, mit einer Kontaktfläche des ersten Moduls fest verbunden zu werden, und eine zweite Platine, die geeignet ist, mit einer Kontaktfläche des zweiten Moduls fest verbunden zu werden.

3. Antennensystem nach einem der Ansprüche 1 und 2, wobei das Schnittstellenteil einstückig mit dem ersten RF-Modul oder mit dem zweiten Montagemodul ausgeführt sein kann.

4. Antennensystem nach Anspruch 3, wobei das Schnittstellenteil zweiteilig ausgeführt sein kann, wobei ein erster Teil einteilig mit dem ersten RF-Modul ist und ein zweiter Teil einteilig mit dem zweiten Montagemodul ist.

5. Antennensystem nach einem der vorstehenden Ansprüche, eine allgemeine glatte, runde Form besitzend.

6. Antennensystem nach einem der vorstehenden Ansprüche, wobei das erste Modul eine mindestens teilweise zylindrische Form besitzt.

7. Antennensystem nach einem der vorstehenden Ansprüche, wobei das zweite Modul geeignet ist, das Antennensystem auf einer rohrförmigen oder ebenen Halterung zu befestigen.

8. Antennensystem nach einem der vorstehenden Ansprüche, wobei die erste Achse (X-X') des ersten Moduls und die zweite Achse (Y-Y') des zweiten Moduls zusammenfallen.

9. Antennensystem nach einem der Ansprüche 1 bis 7, wobei die erste Achse (X-X') des ersten Moduls und die zweite Achse (Y-Y') des zweiten Moduls im Wesentlichen senkrecht sind.

## Claims

1. An antenna system comprising:
- a first module, arranged along a first axis (X-X'), serving the radio frequency function and containing at least one antenna and at least one radio connection box,
the antenna system being **characterized in that** it comprises:
- a second, mounting module, arranged along a second axis (Y-Y'), ensuring the positioning and fastening of the antenna system on a mount arranged along a third axis (Z-Z'), and said second module being adapted to perform a first rotation (83) around said third axis (Z-Z'),
- an interface part serving as a connection between the first module and the second module, said connection between the interface part and the first module enabling a second rotation (81) of the first module around the first axis (X-X'), and said connection between the interface part and the second module enabling a third rotation (82) of the interface part and of the first module around the second axis (Y-Y'),
the antenna system enabling the alignment of the antenna by the first rotation (83) and by the second rotation (81) and by the third rotation (82).

2. An antenna system according to claim 1, wherein the interface part comprises a first plate that can be rigidly connected to a contact surface of the first module and a second plate that can be rigidly connected to a contact surface of the second module.

3. An antenna system according to one of the claims 1 and 2, wherein the interface part can be constructed from a single part with the first RF module or with the second mounting module.

4. An antenna system according to claim 3, wherein the interface part can be constructed from two pieces, a first piece formed of the same part as the first RF module and a second piece formed of the same part as the second mounting module.

5. An antenna system according to any one of the preceding claims, having a general smooth rounded shape.

6. An antenna system according to any one of the preceding claims, wherein the first module has an at least partially cylindrical shape.

7. An antenna system according to any one of the preceding claims, wherein the second module is able to fasten the antenna system onto a tubular or flat mount.

8. An antenna system according to any one of the preceding claims, wherein the first axis (X-X') of the first module and the second axis (Y-Y') of the second module are the same.

9. An antenna system according to one of the claims 1 to 7, wherein the first axis (X-X') of the first module and the second axis (Y-Y') of the second module are substantially perpendicular.
